# EUROPÄISCHE PATENTSCHRIFT

(11) **EP 0 819 145 B1**
(45) Veröffentlichungstag und Bekanntmachung des Hinweises auf die Patenterteilung: **06.03.2002**
(21) Anmeldenummer: 96908137.1
(22) Anmeldetag: 25.03.1996
(51) Int. Cl.: C08G 69/10, C11D 3/37, C08G 73/10

(54) **IMINODISUCCINAT-ENTHALTENDE POLYMERE**
IMINODISUCCINATE-CONTAINING POLYMERS
POLYMERES CONTENANT DE L'IMINODISUCCINATE

(30) Priorität: 06.04.1995 DE 19512898; 28.07.1995 DE 19527572
(43) Veröffentlichungstag der Anmeldung: 21.01.1998
(73) Patentinhaber: BAYER AG, 51368 Leverkusen (DE)
(72) Erfinder: HEUER, Lutz, D-47800 Krefeld (DE); WOLLBORN, Ute, D-47800 Krefeld (DE); PIRKL, Hans-Georg, D-51061 Köln (DE); MENZEL, Thomas, D-40723 Hilden (DE); LIESENFELDER, Ulrich, D-51469 Bergisch Gladbach (DE); JOENTGEN, Winfried, D-51067 Köln (DE); GROTH, Torsten, D-51519 Odenthal (DE); TRAENCKNER, Hans-Joachim, D-51375 Leverkusen (DE); MÜLLER, Nikolaus, D-40789 Monheim (DE); UHR, Hermann, D-47800 Krefeld (DE); HEISE, Klaus-Peter, D-51519 Odenthal (DE); BRÜCHER, Karl-Hermann, D-42549 Velbert (DE); WESENER, Joachim-Reinhard, D-51061 Köln (DE); WAGNER, Paul, D-40597 Düsseldorf (DE)
(86) Internationale Anmeldenummer: EP9601310
(87) Internationale Veröffentlichungsnummer: WO9631554

(56) Entgegenhaltungen:
- WO-A-93/23452
- DE-A- 4 221 875
- US-A- 4 839 461
- US-A- 5 468 838

## Beschreibung

Die Erfindung betrifft neue Polymere mit wiederkehrenden Succinyleinheiten, die auch Iminodisuccinateinheiten enthalten, sowie ein Verfahren zu ihrer Herstellung.

Die Herstellung und Verwendung von Polyasparaginsäure (PAA) und ihrer Derivate ist seit langem Gegenstand zahlreicher Veröffentlichungen und Patente.

Gemäß J. Org. Chem., 24, p. 1662-1666, (1959), wird Polysuccinimid (PSI), welches dort als "Anhydropolyasparaginsäure" bezeichnet wird, durch thermische Polykondensation von Maleinamidsäure oder Äpfelsäuremonoammoniumsalz bei Temperaturen bis 200°C erhalten. Die Polymerausbeuten betrugen bei 200°C 75 % bis 79 %. Weiterhin werden als mögliche Einsatzstoffe Äpfelsäure, Maleinsäureanhydrid, Fumarsäure und Asparagin genannt.

Ebenso kann die Herstellung durch thermische Polykondensation von Asparaginsäure lt. J. Org. Chem. 26, 1084 (1961) erfolgen. Es tritt als Zwischenstufe zunächst das Polysuccinimid (PSI) auf, welches dort ebenfalls als "Anhydropolyasparaginsäure" bezeichnet wird. Durch Hydrolyse kann PSI in PAA überführt werden.

US-A 4 839 461 (= EP-A 0 256 366) beschreibt die Herstellung von Polyasparaginsäure aus Maleinsäureanhydrid, Wasser und Ammoniak. Maleinsäureanhydrid wird im wäßrigen Medium unter Zugabe von konzentrierter Ammoniaklösung umgesetzt und anschließend polymerisiert. Während dieser Polymerisation wird die Masse zunächst hochviskos und anschließend fest-porös, was ein verfahrenstechnisch aufwendiges Handling erfordert.

Aus US-A 4 590 260 ist bekannt, daß Aminosäuren zusammen mit Derivaten der Äpfel-, Malein- und/oder Fumarsäure bei 100 bis 225°C polykondensierbar sind. Gemäß US-A 4 696 981 lassen sich zur Durchführung einer derartigen Reaktion Mikrowellen erfolgreich einsetzen.

US-A 5 296 578 beschreibt die Herstellung von PSI aus Maleinsäureanhydrid, Wasser und Ammoniak. Maleinsäureanhydrid wird in Wasser zu Maleinsäure hydrolysiert und anschließend mit konzentrierter Ammoniaklösung in das Ammoniumsalz überführt. In einem Rührreaktor wird das Wasser aus der Lösung verdampft und anschließend das Monoammoniumsalz in Masse bei Temperaturen oberhalb von 170°C zu PSI polymerisiert Hierbei wird die Masse in mehreren Stunden über hochviskose Phasenzustände hinweg zum festen PSI umgesetzt und anschließend zu PAA hydrolysiert.

US-A 5 288 783 beschreibt die Herstellung von PAA aus Maleinsäure oder Fumarsäure, Wasser und Ammoniak. Maleinsäureanhydrid wird mit Wasser im Rührkessel vermischt und unter Kühlen zu Maleinsäure umgesetzt. Durch Zugabe von konzentrierter Ammoniaklösung wird das Maleinsäuremonoammoniumsalz hergestellt. Anschließend wird das enthaltene Wasser verdampft und das trockene Monoammoniumsalz bei Temperaturen von 190 bis 350°C polymerisiert. Alternativ wird vorgeschlagen, das in wäßriger Lösung vorliegende Monoammoniumsalz bei Temperaturen von 160 bis 200°C durch Extrusion zu PSI weiter zu verarbeiten. Das auf einem der beiden Verfahrenswegen hergestellte PSI wird anschließend alkalisch zu PAA hydrolysiert.

EP-A 593 187 beschreibt die Herstellung von PSI durch thermische Polymerisation von Maleinamidsäure bei Temperaturen von 160 bis 330°C bei einer Reaktionsdauer von 2 Minuten bis 6 Stunden. Es wird auch auf die Polykondensation im Lösungsmittel unter Verwendung von Kondensationshilfsmitteln hingewiesen.

DE-A 4 221 875 beschreibt zwar die Herstellung von modifizierten Polyasparaginsäuren durch Polykondensation und ihre Verwendung als Zusätze für Waschmittel, Reinigungsmittel, Wasserbehandlungsmittel und Belagsverhinderer beim Eindampfen von Zuckern, es werden jedoch keine Iminodisuccinat-haltigen Polyasparaginsäuren erwähnt.

Die Erfindung betrifft Polymere mit wiederkehrenden Succinyleinheiten, dadurch gekennzeichnet, daß sie Iminodisuccinateinheiten enthalten. Diese Iminodisuccinat einheiten können als Endgruppe und/oder als wiederkehrende Einheiten vorliegen. Weiterhin wurde ein Verfahren zur Herstellung dieser Polymere gefunden, das dadurch gekennzeichnet ist, daß man Maleinsäureanhydrid, Maleinsäure, Maleinsäurederivate, Fumarsäure oder deren Derivate und gegebenenfalls Comonomere wie beispielsweise Asparaginsäure und Asparagin in Gegenwart von überschüssigem Ammoniak im Molverhältnis 1:1,5-4,0 bei 150°C bis 190°C, in einer Vorrichtung zur thermischen Polymerisation die eine enge Verweilzeitverteilung der viskos-flüssigen Phase und gleichzeitig partielles Verdampfen des Lösungsmittels sowie des bei der Polymerisation gebildeten Reaktionswassers ermöglicht, polymerisiert und gegebenenfalls die erhaltenen primären Polymerisationsprodukte in Gegenwart einer Base und gegebenenfalls in Anwesenheit von weiterer Maleinsäure vollständig oder teilweise neutralisiert.

Die neuen erfindungsgemäßen Copolymere weisen wiederkehrende Succinyl-Einheiten mit wenigstens einer der folgenden Strukturen auf 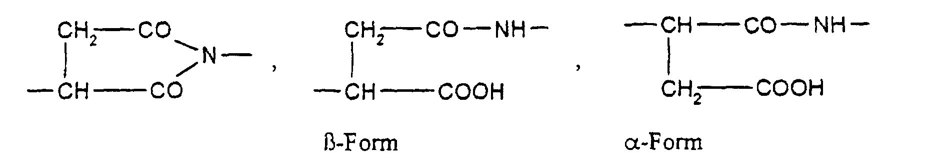 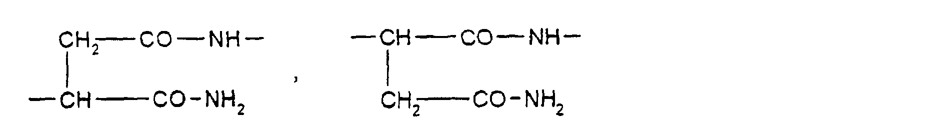 oder eines Salzes davon.

Die Iminodissucinateinheiten haben wenigstens eine der folgenden Strukturen: 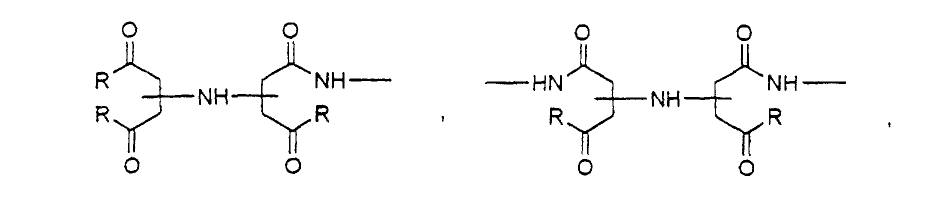 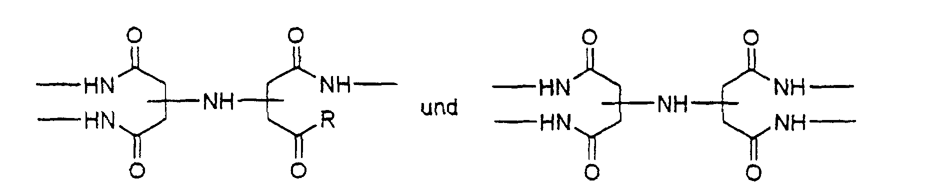 wobei R OH, O⁻NH₄⁺ oder NH₂ bedeutet, wobei das molare Verhältnis der im Polymer eingebauten Iminodisuccinateinheiten zur Summe aller im Polymer eingebauten wiederkehrenden Einheiten 2 bis 25 Mol-% beträgt.

Das hergestellte Polymer zeigt in Abhängigkeit von den Reaktionsbedingungen, beispielsweise Verweilzeit und Temperatur der thermischen Polymerisation, unterschiedliche Kettenlängen bzw. Molekulargewichte nach gelpermeationschromatographischen Analysen (Mw = 500 bis 10.000, bevorzugt 500 bis 5.000, besonders bevorzugt 700 bis 4.500). Bezogen auf die Gruppen 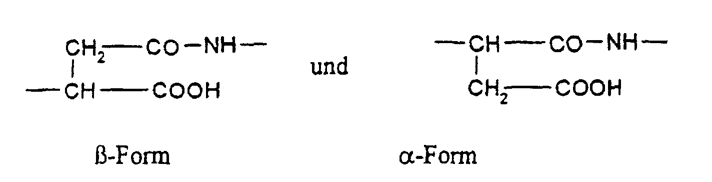 (wiederkehrende Asparaginsäureeinheiten) liegen vorzugsweise wenigstens 50%, insbesondere wenigstens 70%, β-verknüpft vor.

Die Iminodisuccinateinheiten können im Polymer statistisch verteilt oder bevorzugt als Endgruppe vorliegen. Das molare Verhältnis der im Polymer eingebauten Iminodisuccinateinheiten zur Summe aller im Polymer eingebauten Monomereinheiten beträgt 2 Mol-% bis 25 Mol-%.

Zusätzlich können durch geeignete Reaktionsführung und Wahl der Edukte weitere wiederkehrende Einheiten enthalten sein, z. B.
a) Äpfelsäure-Einheiten der Formel 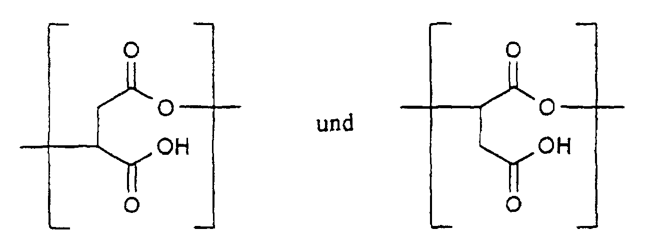
b) Maleinsäure- und Fumarsäure-Einheiten der Formel

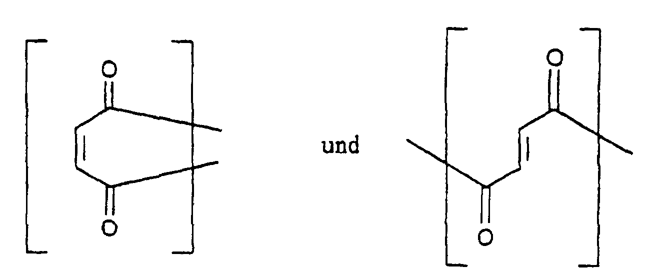

Als Edukte (A) werden Maleinsäureanhydrid, Maleinsäure, Maleinsäurederivate, Fumarsäure und Fumarsäurederivate eingesetzt. Als Stickstoff-haltige Komponente (B) können Ammoniak in flüssiger Form, gasförmig oder gelöst in geeigneten Lösungsmitteln sowie Ammoniak-liefernde Verbindungen wie Ammoniumsalze organischer oder anorganischer Säure, z.B. Mono- oder Diammoniumcarbonat, Ammoniumchlorid, Ammoniumacetat etc., verwendet werden. Weiterhin können Comonomere (C) wie Asparaginsäure, Asparagin und Äpfelsäure, Zitronensäure, Itaconsäure, Citraconsäure und Aconitsäure zugesetzt werden.

Die Edukte können einzeln oder in Gemischen, in Substanz oder in Lösung, eingesetzt werden. Die erfindungsgemäßen Polymeren können gegebenenfalls als freie Säure oder als Salz vorliegen, bevorzugte Salze sind z.B. Alkali- und Ammoniumsalze.

Maleinsäureanhydrid oder ihre Derivate werden in einer bevorzugten Ausführungsform als Schmelze eingesetzt.

Die Umsetzung der Edukte kann gegebenenfalls in Gegenwart eines Lösungsmittels durchgeführt werden. Als Lösungsmittel geeignet sind Wasser, niedere Alkohole, polar aprotische Lösungsmittel, wie Dimethylformamid, N-Alkylpyrrolidon, Sulfolan, Aceton, Polyalkylenglykole, Polyalkylenglykolmonoalkylether und Polyalkylenglykoldialkylether. Ebenfalls geeignet sind überkritische Gase, wie z.B. Kohlendioxid und Ammoniak. Besonders geeignet ist Wasser.

In einer bevorzugten Ausführungsform sind die Edukte geschmolzenes Maleinsäureanhydrid (Edukt A) und Ammoniaklösung, insbesondere eine wäßrige Ammoniaklösung (Edukt B).

Maleinsäureanhydrid bzw. Derivate davon werden als Edukt A vorzugsweise in solchen Mengen eingesetzt, daß das molare Verhältnis von Stickstoff im Edukt B relativ zum Maleinsäureanhydrid oder einem Derivat davon im Edukt A zwischen 1,5 und 4,0 und bevorzugt zwischen 1,9 und 4,0 liegt.

Die erfindungsgemäßen Polymere sind auf verschiedenen Verfahrenswegen erhältlich. So können beispielsweise Zwischenprodukte wie Maleinsäurediammoniumsalz oder Maleinamidsäureammoniumsalz aus den oben genannten Edukten in einem getrennten Verfahrensschritt hergestellt und anschließend in Substanz oder im geeigneten Lösungsmitteln diskontinuierlich oder kontinuierlich thermisch polymerisiert werden.

Die thermische Polymerisation wird bei Temperaturen zwischen 150°C und 190°C, durchgeführt. Die Verweilzeit beträgt vorzugsweise zwischen 1 Sekunde und 600 Minuten, bevorzugt 5 Sekunden bis 180 Minuten, besonders bevorzugt 10 Sekunden bis 150 Minuten.

Ein weiteres Verfahren zur Herstellung der erfindungsgemäßen Polymere besteht aus den folgenden Schritten:
a) Wenigstens eines der oben unter A angegebenen Edukte wird kontinuierlich mit wenigstens einem der oben unter B angegebenen Edukte in Kontakt gebracht, gegebenenfalls in Gegenwart eines Fluidisierungsmittels und auch gegebenenfalls unter Zusatz eines der unter C beschriebenen Comonomeren.
b) Das in situ erhaltene Reaktionsgemisch wird kontinuierlich in einem geeigneten Reaktor bei Temperaturen von 150°C bis 190°C mit Verweilzeiten von 1 Sekunde bis 600 Minuten, besonders bevorzugt 5 Sekunden bis 180 Minuten und besonders bevorzugt 10 Sekunden bis 150 Minuten polymerisiert.
c) Gegebenenfalls kann zum Ende der Polymerisation weiteres Maleinsäureanhydrid oder weitere Maleinsäure und eine Base zudosiert werden. Geeignete Basen sind Alkali- und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc.

Eine bevorzugte Ausführungsform des oben beschriebenen allgemeinen Verfahrens ist dadurch gekennzeichnet, daß die Reaktion der Edukte (A, B) im ersten Reaktionsschritt weitgehend adiabatisch erfolgt und die dabei freigesetzte Reaktionswärme eingesetzt wird, um das Reaktionsgemisch auf Polymerisationstemperatur zu bringen und im zweiten Reaktionsschritt das N-haltige niedermolekulare Derivat unter Erhalt eines Polymeren mit wiederkehrenden Succinyl-Einheiten zumindest teilweise zu polymerisieren.

Geeignete Vorrichtungen zur genügend schnellen Vermischung zweier Flüssigströme sind aus vielen Literaturangaben und Patenten bekannt (z.B. Ullmann: Encyclopedia of Industrial Chemistry, 1982, Vol. B2, Chap. 25; Vol. B4, 561-586; Perry's Chemical Engineers' Handbook, 6. ed. (1984), Mc-Graw-Hill, N.Y., 21-61; M.H. Pohl, E. Muschelknautz, Chem. Ing. Tech. 51 (1979), 347 - 364; Chem. Ing. Tech. 52 (1980), 295 - 291.)

Bevorzugte Vorrichtungen zur schnellen Vermischung der Eduktströme sind alle Arten von Strahlmischern, statischen Mischern und dynamischen Mischern. Besonders bevorzugte Vorrichtungen zur schnellen Vermischung der Edukte und zum Starten der exothermen Reaktion stellen Strahlmischer dar, deren weitere Vorteile bei der hermetischen Dichtheit, der variabel einstellbaren Mischenergie und der globalen plug-flow-Charakteristik liegen.

In einer bevorzugten Ausführungsform werden die Edukte bei der Durchführung des 1. Reaktionsschrittes zur Verminderung von unerwünschten Nebenreaktionen in einem schnell vermischenden Apparat der o.g. Bauart gemischt und parallel bzw. danach die exotherme Bildung der Zwischenprodukte durchgeführt. Die dabei freiwerdende Wärme wird in dem Edukt-Zwischenprodukt-Gemisch im wesentlichen gespeichert. Dadurch wird das Reaktionsgemisch auf Polymerisationstemperatur gebracht und gegebenenfalls das organische Lösungsmittel oder das Wasser sowie bei der Reaktion entstehendes Wasser ganz oder zumindest teilweise verdampft. In einer besonders bevorzugten Ausführungsform erfolgt die Mischung in < 2 s und die exotherme Bildung der Zwischenprodukte in weniger als 60 s.

Das aus der ersten Reaktionsstufe austretende Reaktionsgemisch wird anschließend in einem geeigneten Apparat zur Polymerisation gebracht.

Für die thermische Polymerisation eignen sich grundsätzlich alle Apparate, die bei einer engen Verweilzeitverteilung der viskos-flüssigen Phase die notwendige Mindestverweilzeit zur Polymerisation und gleichzeitig eine zumindest partielle Verdampfung des Lösungsmittels, insbesondere des Wassers, sowie des bei der Reaktion gebildeten Wassers ermöglichen.

Bevorzugte Vorrichtungen zur thermischen Polymerisation sind also alle Apparate, die eine definierte Verweilzeit mit einer engen Verweilzeitverteilung für die feste oder hochviskosflüssige Phase aufweisen und gleichzeitig eine gute Temperierung durch ein zumindest partielles Verdampfen des Lösungsmittels (org. Lösungsmittel und/oder Wasser) und/oder des bei der Polymerisation gebildeten Reaktionswassers ermöglichen. Solche bevorzugten Vorrichtungen können beispielsweise sein
a) Verweilrohre
b) Hochviskosreaktoren (z. B. Schnecke, List-Reaktor)
c) Trockner (z. B. Schaufeltrockner, Sprühtrockner)
d) Rührkesselkaskade
e) Dunnschichtverdampfer.
f) Mehrphasen-Wendelrohr-Reaktoren (MPWR) (DT 1 667 051, DE-A 219 967)

Besonders gute Ergebnisse werden erzielt, wenn die Edukte (A, B) einem Strahlmischer zugeführt werden, dem ein Rohrreaktor oder ein Mehrphasenwendelrohr nachgeschaltet ist. Diese Apparatekombination hat sich zur Durchführung des erfindungsgemäßen Verfahrens besonders bewährt.

Zur Kontrolle der Reaktortemperatur der durchgeführten Reaktionen kann eine vollständige oder auch partielle Kreisführung des Reaktionsgemisches in Kombination mit Wärmabfuhr erfolgen. Für eine solche Reaktionsführung eignen sich insbesondere alle Reaktoren oben genannter Bauart mit Rückführung des Reaktionsgemisches in Kombination mit Wärmeabfuhr sowie alle Schlaufenreaktoren.

In einer weiteren Variante des erfindungsgemäßen Verfahrens kann zur Vermeidung eines zu schnellen und starken Temperaturanstiegs des Reaktionsgemisches aufgrund der sehr exothermen schnellen Zwischenproduktbildung eine Eduktkomponente an mehreren Stellen in geeigneter Weise entlang des Rohr- bzw. Mehrphasenwendelrohrreaktors eindosiert werden, so daß ein optimales Temperaturprofil erzielt werden kann. Dadurch wird vermieden, daß es zum Auftreten von zu hohen Temperaturen kommt, die zu Produktschädigungen führen können.

Ebenso können auch die gegebenenfalls zuzusetzenden Comonomeren (C) zugesetzt werden. Weiterhin kann die letzte Dosierstelle, die kurz vor dem Reaktorausgang liegt, dazu benutzt werden, eine der oben genannten Basen und gegebenenfalls weiteres Edukt A zuzugeben, um eine Pfropfung des Polymeren mit Iminodisuccinateinheiten zu erreichen.

Die Vermischung der Edukte kann je nach den verwendeten Edukten bei Temperaturen zwischen 0°C und 200°C erfolgen. Die exotherme adiabatische Reaktion des ersten Reaktionsschritts liefert dann genügend Wärme, so daß der zweite Reaktionsschritt dann je nach Art und Konzentration der verwendeten Edukte bei 150 bis 190°C stattfinden kann. Vorteilhaft wird die Temperatur über den Druck im Reaktor und die Mengenströme der zugeführten Edukte (A, B), sowie den Gehalt an organischem Lösungsmittel und/oder Wasser eingestellt. Zur Unterstützung der Temperaturführung während der Reaktion können auch Kühl- und Heizmedien eingesetzt werden. Weiterhin können Produkt-Edub-Bereiche mit unterschiedlichen Temperaturen im Reaktionssystem zwecks Wärmeaustausch direkt oder indirekt in Kontakt gebracht werden.

Die Verweilzeiten der obengenannten Edukte in dem früher beschriebenen Reaktorsystem betragen bis zu 600 Minuten. Bevorzugt sind Verweilzeiten von bis zu 180 Minuten. Besonders bevorzugt sind mit steigender Temperatur abnehmende Verweilzeiten. Die Verweilzeit im Reaktorsystem wird vorzugsweise so gewählt, daß eine praktisch vollständige Umsetzung des im Unterschuß eingesetzten Edukts A, bevorzugt MSA, gewährleistet ist. Zur praktisch vollständigen Polymerisation kann es erforderlich sein, das bereits kurz nach der Vermischung in der ersten Reaktionsstrecke, besonders bevorzugt in einem Rohrreaktor, erhaltene Monomeren- und Oligomerengemisch in eine weitere oben vorgeschlagene Vorrichtung, bevorzugt einen Hochviskosreaktor, umzusetzen. Besonders bevorzugt kann jedoch auf einen solchen Hochviskosreaktor verzichtet werden und es gelingt bereits in einem Verweilrohr, bevorzugt in einem Mehrphasenwendelrohr eine vollständige Polymer-Bildung. Die erhaltenen Reaktionsprodukte sind je nach Wasser- bzw. Lösungsmittelgehalt wegen der freiwerdenden Reaktionsenthalpie heiße Lösungen oder lösungsmittelhaltige bzw. wasserhaltige Schmelzen. Die Reaktionsenthalpie kann weitgehend im Reaktor genutzt werden. Dadurch wird eine optimale Wärmeführung mit geringen Invest- und Betriebskosten einer verfahrenstechnischen Anlage erreicht, die zu einer hohen Wirtschaftlichkeit führt.

Beim Einsatz der Oligomer-haltigen Schmelzen in einem Hochviskosreaktor kann die Reaktionsgeschwindigkeit in einer bevorzugten Reaktionsführung im Gegensatz zur ebenfalls möglichen Direktsynthese aus den Zwischenprodukten Maleinsäurediammoniumsalz oder Maleinamidsäureammoniumsalz in einer solchen Vorrichtung durch die bereits vorgeheizten und aufgrund der freigesetzten Reaktionswärme partiell durch Verdampfen an Lösungsmittel verarmte viskose Masse erheblich gesteigert werden. Die Verweilzeit wird durch diese Verfahrensweise gegenüber dem Stand der Technik deutlich gesenkt.

Soweit es sich bei den primären Polymerisationsprodukte um Ringsysteme handelt, können diese durch Umsetzung mit einer Base gegebenenfalls in Gegenwart von Wasser in ein offenhaltiges System, z.B. ein PAA-haltiges Copolymer-Salz überführt werden. Diese Umwandlung von z.B. PSI-haltigen in PAA-haltige Copolymere geschieht in einer geeigneten Vorrichtung durch Hydrolyse. Bevorzugt ist dabei im wässrigen System ein pH-Wert zwischen 5 und 14 geeignet. In besonders bevorzugter Form wird ein pH-Wert von 7 bis 12 gewählt, insbesondere durch den Zusatz einer Base. Geeignete Basen sind Alkali- und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc..

Die Temperatur bei der Hydrolyse liegt geeigneter Weise in einem Bereich einschließlich bis zum Siedepunkt der Succinylgruppen-haltigen Suspension oder Lösung und bevorzugt bei 20 bis 150°C. Die Hydrolyse wird gegebenenfalls unter Druck durchgeführt. Die Hydrolyse wird gegebenenfalls unter Zusatz eines weiteren monoethylenisch ungesättigten Carbonsäurederivates durchgeführt. Geeignet sind beispielsweise Maleinsäureanhydrid, Maleinsäure, Citraconsäure, Itaconsäure, Aconitsäure, Acrylsäure und Fumarsäure.

Unter den basischen Bedingungen der Hydrolyse kann eine Addition der Aminogruppen des N-terminalen Endes des Polymermoleküls an das in der Salzform vorliegende monoethylenisch ungesättigte Carbonsäurederivat stattfinden.

In Abhängigkeit der vorne beschriebenen Polymerisationsbedingungen können die primären Polymerisationsprodukte auch ethylenisch ungesättigte Endgruppen besitzen. Daher kann es sinnvoll sein, dem Reaktionsgemisch während der basischen Hydrolyse gegebenenfalls auch Aminocarbonsäuren, z.B. Glycin, Asparaginsäure, Lysin, Glutaminsäure etc., zuzusetzen. Durch diese Maßnahme wird eine Propfung der Polymerendgruppen erreicht.

Die primären Polymerisationsprodukte wurden mittels Elementaranalyse charakterisiert. Hierbei wurden neben Kohlenstoff und Wasserstoff noch drei unterschiedliche Stickstoffarten bestimmt. Die Analyse unterschied zwischen ionisch gebundenem Stickstoff (Ammoniumionen), hydrolytisch empfindlichem Stickstoff (z.B. Amid- oder Imid-Stickstoff) und "nicht hydrolysierbarem" Stickstoff (Amin-Stickstoff). Auf diese Weise konnte die für eine verbesserte Wirksamkeit notwendige optimale Hydrolyse verfolgt werden.

Die erfindungsgemäßen Polymere zeichnen sich durch ein verbessertes Calciumbindevermögen aus. Weiterhin zeigen sie Komplexbildungseigenschaften gegenüber Schwermetallen wie z.B. Kupfer, Eisen etc.. Sie können als Zusatz in phospatarmen und phosphatfreien Wasch- und Reinigungsmitteln verwendet werden. Die Polymerisate sind Builder für Waschmittel und bewirken während des Waschvorgangs eine Verminderung der Inkrustrierung und Vergrauung auf dem gewaschenen Textilgut.

Weiterhin inhibieren und verzögern die erfindungsgemäßen Polymeren die Ausfällung von Salzen, insbesondere Kristallen, z.B. von Calciumcarbonat, Calciumsulfat, Calciumphosphat, Bariumsulfat und Magnesiumsilikat, aus wäßrigen Lösungen und sind daher als Wasserbehandlungsmittel geeignet. Sie können dem Wasser in Kühlkreisläufen, Verdampfern oder Meerwasserentsalzungsanlagen zugesetzt werden und Einpreßwässern bei der sekundären Ölförderung und Wasserbehandlung im Bergbau. Außerdem können sie als Belagsverhinderer bei der Eindampfung von Zuckersaft eingesetzt werden.

Aufgrund ihrer komplexbildenden Eigenschaft gegenüber Schwermetallen können die Copolymere auch als Stabilisierungsmittel für Bleichmittel wie Wasserstoffperoxid in Bleichprozessen dienen.

Die erfindungsgemäßen Copolymerisate sind nach den "OECD Guidelines for testing of chemicals (1981)" als biologisch abbaubar einzustufen.

### Beispiele

Die primären Polymerisationsprodukte wurden mittels Elementaranalyse charakterisiert. Hierbei wurden neben Kohlenstoff und Wasserstoff noch drei unterschiedliche Stickstoffarten bestimmt. Die Analyse unterschied zwischen ionisch gebundenem Stickstoff (Ammoniumionen), hydrolytisch empfindlichem Stickstoff (z. B. Amid- oder Imid-Stickstoff) und "nicht hydrolysierbarem" Stickstoff (Amin-Stickstoff). Auf diese Weise konnte die für eine verbesserte Wirksamkeit notwendige optimale Hydrolyse verfolgt werden.

Die nach der Hydrolyse erhaltenen erfindungsgemäßen Polymere wurden mit Hilfe von ¹H-NMR und ¹³C-NMR sowohl in der Salzform als auch nach Überführung in die freie Säure analysiert. Die Imidodibernsteinsäure-Einheiten wurden anhand der chemischen Verschiebungen von δ₁ = 3,8 ppm (¹H-NMR) und δ₂ = 55,5 ppm (¹³C-NMR) für die CH-Gruppen sowie von δ₃ = 2,7 ppm (¹H-NMR) und δ₄ = 36,7 ppm (¹³C-NMR) für die CH₂-Gruppen identifiziert. Der Restmonomerengehalt wurde durch HPLC und die Polymerverteilung durch GPC gegen Polyacrylate oder Polyasparaginsäuren der Fa. Sigma als Standard bestimmt.

### Beispiel 1

In einem 0,7 l V4A-Autoklaven wurden 268 g (2 mol) Maleinamidsäureammoniumsalz und 72 g (2 mol) Wasser miteinander vermischt. Das Gemisch wurde für 30 Minuten auf 150°C erwärmt. Hierbei baute sich ein Druck von ca 4 bar auf. Man erhielt ein rotes, bei 80°C fließfähiges Reaktionsgemisch. Um das Gemisch auch bei Raumtemperatur flüssig zu erhalten, setzt man noch 100 g Wasser zu.

| | | |
|---|---|---|
| Elementaranalyse | C | 23,1 % |
| | N (gesamt) | 13 % |
| | N (hydrolysierbar) | 2,3 % |
| | NH₄⁺ | 5,6 % |

Das Reaktionsgemisch enthielt noch ca. 20 % monomere Asparaginsäure und Asparagin sowie 3 % Maleinsäure bezogen auf den Einsatz. Das Reaktionsgemisch wurde mit 20 %iger Natronlauge bei Siedetemperatur (100-105°C) unter Abdestillieren des freiwerdenden Ammoniaks soweit hydrolisiert, bis daß der Restanteil des hydrolisierbaren Stickstoffs kleiner als 3 % d. Th. war. Hierzu wurden 2,6 mol NaOH benötigt. Man erhielt eine wäßrige Lösung des Polyasparaginsäurecopolymer-Natriumsalzes. Das mittlere Molekulargewicht Mw betrug 1410.

### Beispiel 2

In einem 0,7 l V4A-Autoklav wurden 196 g (2 mol) Maleinsäureanhydrid und 90 g (5 mol) Wasser miteinander vermischt. Das Gemisch wurde auf 60°C erwärmt und 30 Minuten bei dieser Temperatur gerührt. Anschließend wurden bei 60 - 90°C innerhalb von 30 Minuten 78,2 g (4,6 mol) Ammoniak eingeleitet, unter Erhalt einer wäßrigen Lösung des Maleinsäurediammoniumsalzes. Dieses Gemisch wurde innerhalb von 30 Minuten auf 150°C erwärmt und 30 Minuten bei dieser Temperatur gerührt. Hierbei baute sich ein Druck von 8 bar auf. Nach dem Abkühlen unter Zusatz von 100 g Wasser erhielt man ein zähflüssiges Gemisch, welches die folgende Elementarzusammensetzung hatte.

| | | |
|---|---|---|
| Elementaranalyse | C | 20,4 % |
| | N (gesamt) | 13,5 % |
| | N (hydrolysierbar) | 1,9 % |
| | NH₄⁺ | 6,8 % |

Das Reaktionsgemisch enthielt 15 % Asparaginsäure und Asparagin in monomerer Form sowie 5 % Maleinsäuren bezogen auf den Einsatz. Das rohe Reaktionsgemisch wurde mit 20 %iger Natronlauge bei etwa 105°C unter Abdestillieren des freiwerdenden Ammoniaks soweit hydrolysiert, bis daß der Restanteil des hydrolysierbaren Stickstoffs kleiner als 3 % war. Dazu wurden 2,5 mol NaOH benötigt. Man erhielt eine wäßrige Lösung des Salzes eines Polyasparaginsäurecopolymeren. Das mittlere Molekulargewicht (Mw) betrug 1330.

### zu Beispielen 3 und 4

Die Polymerisationsreaktionen wurden in einem Hochviskosreaktor vom Typ Lurgi Selfcleaner der Fa. Lurgi durchgeführt. Der "Selfcleaner" ist eine kontinuierlich selbstreinigende Gleichdrallschneckenmaschine mit Hohlwellen. Sowohl die Hohlwellen als auch der Gehäusemantel wurde zur Temperierung von einem Wärmeträger durchströmt. Die Temperaturausführung war folgendermaßen: Der flüssige Wärmeträger strömte zuerst durch die Hohlwellen, trat dann in der Nähe des Produktaustrittes in den letzten hohlen Gewindegang ein und durchströmte die Gewindegänge im Gegenstrom zum im Trog transportierten Produkt. Das Gerät besaß mehrere Ausgasungsdome, die bei Bedarf geöffnet und geschlossen werden konnten. Mit ihrer Hilfe konnte ein beliebiger Wasser- bzw. Wasserdampfgehalt im Reaktionseemisch eingestellt werden. Die Hohlschnecken des "Selfcleaner" hatten ein selbstreinigendes Rundprofil. Das Gewinde der einen Hohlschnecke ragte, bis auf eine gewisses Spiel, ganz in die Gewindelücke der anderen Schnecke. Das Spiel zwischen den beiden Hohlwellen einerseits und zwischen den Hohlwellen und dem Trog andererseits betrug ca. 3 mm. Das verwendete Gerät hat folgende Maße: L = 900 mm, ⊕ = 100 mm.

### Beispiel 3

### Herstellung eines Iminosuccinat-haltigen Polysuccinimid-Polyasparaginsäure-Copolymeren aus Maleinamidsäureammoniumsalz

16 kg Maleinamidsäureammoniumsalz (120,3 mol), Schmelzpunkt 132°C, wurden kontinuierlich mit einer Dosierrate von 6 kg/h über eine Förderschnecke in den Mischungsteil der auf 145 - 150°C geheitzten Schnecke gebracht. In der Mischungszone wurde auf der heißen Oberfläche der Schneckenwellen sofort ein dünner Schmelzfilm gebildet, der unter Entweichen von Reaktionswasser polymerisierte. Im weiten Verlauf der Schnecke wurde das Polymer vollständig getrocknet und verließ die Schnecke als grobkörnige bis pulverige Masse. Man erhält 13 490 g Produkt.

| | | |
|---|---|---|
| Elementaranalyse | C | 42 % |
| | N (gesamt) | 20 % |
| | N (hydrolysierbar) | 4,0 % |
| | NH₄⁺ | 5,4 % |

Das mittlere Molekulargewicht Mw nach Überführung ins Natriumsalz analog zu Beispiel 1 und 2 betrug 1720.

### Beispiel 4

### Herstellung eines Iminodisuccinat-haltigen Polysuccinimid-Polyasparaginsäure-Copolymeren aus Diammoniummaleat

13 600 g 25 %ige Ammoniaklösung (200 mol) wurden bei 60°C in einer Stunde zu einer Mischung von 9 800 g (100 mol) Maleinsäureanhydrid und 2 825 g Wasser gegeben. Man erhielt eine 57 %ige Lösung des Diammoniumsalzes der Maleinsäure in Wasser. Die ca. 60°C heiße Lösung wurde mit Hilfe eines Mehrphasenwendelrohrverdampfers auf ca. 140 - 150°C erwärmt. Dabei wurde ein größerer Teil des Wassers aus der Lösung verdampft und man erhält eine wasserhaltige Schmelzlösung. Diese wurde mit einer Geschwindigkeit von 3 kg/h in den Mischungsteil der auf 152 - 154°C erhitzten Schnecke eindosiert. Im Mischungsteil fand sofort ein Ausdampfen des Lösungswassers statt und es bildete sich kurzzeitig das trockene Ammoniumsalz, welches jedoch in der gesättigten Wasserdampfatmosphäre innerhalb der Schnecke wieder angelöst wurde. Dieser Vorgang führte zur Bildung einer Mischphase aus hochkonzentrierter Lösung und Schmelze. Dieser Effekt ermöglichte die Bildung des charakteristischen Schmelzfilmes schon bei einer Temperatur von 148 - 152°C (gemessen in der Schmelze), die deutlich unter der Schmelztemperatur (171°C) des reinen Salzes lag. Im weiteren Verlauf der Schnecke wird dann das Losungs- und Reaktionswassers vollständig entfernt und man erhielt wiederum 12 000 g eines grobkörnigen bis pulverigen Produktes.

| | | |
|---|---|---|
| Elementaranalytik | C | 38,2 % |
| | N (gesamt) | 18,8 % |
| | N (hydrolysierbar) | 4,3 % |
| | NH₄⁺ | 5,85 % |

Das mittlere Molekulargewicht Mw nach Überführung ins Natriumsalz analog zu Beispiel 1 und 2 beträgt 1650.

### zu Beispiel 5 und 6

Die folgenden Beispeile 5 und 6 wurden in einem Reaktorsystem durchgeführt, welches aus einem Strahlmischer der Bauart Glattstrahldüse und einem anschließenden Rohrreaktor bzw. Mehrphasenwendelrohrreaktor bestand. Die thermische Polymerisation wurde gegebenenfalls beendet in einer nachgeschalteten, kontinuierlich betriebenen, selbstreinigenden und mit Hohlwellen bestückten Gleichdrallschneckenmaschine. In den Beispielen wurde geschmolzenes Maleinsäureanhydrid mittels einer Glattstrahldüse gemeinsam mit wäßriger Ammoniaklösung eingedust und schnell in den Rohrreaktor bzw. Mehrphasenwendelrohrreaktor hinein vermischt.

### Beispiel 5

In diesem Beispiel wurde ein mit einer Glattstrahldüse als Strahlmischer versehener Mehrphasenwendelrohrreaktor ohne nachgeschalteten Hochviskosreaktor verwendet. Es wurde geschmolzenes Maleinsäureanhydrid mit 100°C über eine Glattstrahldüse mit 0,5 mm Düsenquerschnitt mit 7°C kalter 45 Gew.-%iger wäßriger Ammoniaklösung vermischt und in den Mehrphasenwendelrohrreaktor dosiert. Nach einer Reaktionsraumlänge von 630 cm wurde zur Druckhaltung nun ein Ventil mit einem variablen Innendurchmesser bis 15 mm in das Rohr des Mehrphasenwendelrohrreaktors eingesetzt, um Druck und Temperatur in gewünschter Weise einzustellen. Ein Verweilrohr mit einer Länge von 40 cm führte vom Mehrphasenwendelrohrreaktor zu einem nachgeschalteten 50 l-Rührkessel, in dem 20 kg Wasser vorgelegt wurden. Die Maleinsäureanhydrid-Schmelze wurde mit einem Massenstrom von 29,8 kg/h bei 46 bar durch die Glattstrahldüse in den Reaktionsraum gedrückt. Die wäßrige Ammoniaklösung wurde bei 30 bar mit 14,65 kg/h in den Reaktionsraum dosiert. Das molare Verhältnis von Maleinsäureanhydrid zu Ammoniak betrug 1 : 1,7. Die Temperatur im Reaktionsraum betrug 174 - 187°C. Bei der Entspannung hinter dem Ventil kam es durch das Verdampfen von Wasser lediglich zu einer Temperaturabsenkung auf etwa 167°C. Das heiße Gemisch wurde in den auf 60°C temperierten Vorlagekessel geleitet und es wurde 45 Gew.-%ige Natronlauge zudosiert, wobei der pH-Wert durch Regelung bei etwa 10,3 gehalten wurde. Die Hydrolyse wurde so lange geführt, bis daß der Restgehalt des hydrolysierbaren Stickstoffs kleiner als 5 % d. Th. war. Man erhielt eine orange-rote wäßrige Polyasparaginsäure-Copolymer-Nariumsalzlösung. Der isolierte Feststoff hatte nach GPC-Messung eine mittlere Molekulargewicht Mw von 1300. Das Produkt zeigte sehr gute Sequestriereigenschaften, sowie ein gutes Schwermetall-Maskierungsverhalten.

### Beispiel 6

In diesem Beispiel wurde ein mit einer Glattstrahldüse als Strahlmischer versehener Mehrphasenwendelrohrreaktor ohne nachgeschalteten Hochviskosreaktor verwendet. Es wurde geschmolzenes Maleinsäureanhydrid mit 100°C über eine Glattstrahldüse mit 0,5 mm Düsenquerschnitt mit 7°C kalter 40 Gew.-%iger wäßriger Ammoniaklösung vermischt und in den Mehrphasenwendelrohrreaktor dosiert. Nach einer Reaktionsraumlänge von 2340 cm wurde zur Druckhaltung nun ein Ventil mit einem variablen Innendurchmesser bis 15 mm in das Rohr des Mehrphasenwendelrohrreaktors eingesetzt, um Druck und Temperatur in gewünschter Weise einzustellen. Ein Verweilrohr mit einer Länge von 40 cm führte vom Mehrphasenwendelrohrreaktor zu einem nachgeschalteten 50 l-Rührkessel, in dem 20 kg Wasser vorgelegt wurden. Die Maleinsäureanhydrid-Schmelze wurde mit einem Massenstrom von 18,7 kg/h bei 40 bar durch die Glattstrahldüse in den Reaktionsraum gedrückt. Die wäßrige Ammoniaklösung wurde bei 25 bar mit 19,5 kg/h in den Reaktionsraum dosiert. Das molare Verhältnis von Maleinsaureanhydrid zu Ammoniak betrug 1 : 2,4. Die Temperatur im Reaktionsraum betrug 163 - 172°C. Bei der Entspannung hinter dem Ventil kam es durch das Verdampfen von Wasser lediglich zu einer Temperaturabsenkung auf etwa 154°C. Das heiße Gemisch wurde in den auf 60°C temperierten Vorlagekessel geleitet und es wurde 45 Gew.-%ige Natronlauge zudosiert, wobei der pH-Wert durch Regelung bei etwa 10,3 gehalten wurde. Die Hydrolyse wurde so lange geführt, bis daß der Restgehalt des hydrolysierbaren Stickstoffs kleiner als 5 % d. Th. war. Man erhielt eine orange-rote wäßrige Polyasparaginsaure-Copolymer-Nariumsalzlösung. Der isolierte Feststoff hatte nach GPC-Messung eine mittlere Molekulargewicht Mw von 850. Das Produkt zeigte sehr gute Sequestriereigenschaften, sowie ein gutes Schwermetall-Maskierungsverhalten

### Beispiel 7 (Vergleichsbeispiel)

133 g (1 mol) D,L-Asparaginsäure wurden in ca. 0,5 cm Schichtdicke auf einem emailierten Backblech verteilt und für 12 h bei 220°C, 10 mbar, in einem Muffelofen erhitzt Man erhielt ein beiges Pulver. Der Asparaginsäure-Umsatz betrug nach HPLC ca. 99 %. Das erhaltene Polysuccinimid (99 g) wurde in wäßriger Lösung mit Natronlauge bei pH 9,5 und einer Temperatur von 70 - 80°C mit Natronlauge hydrolysiert. Der Natronlaugeverbrauch betrug 39,8 g NaOH 100 %ig. Das mittlere Molekulargewicht Mw, gemessen mit GPC (Gelpermeationschromatographie) gegen Polyasparaginsäurestandards der Fa. Sigma betrug 5800.

### Vorschrift zur Bestimmung der Calciumcarbonatdispergierkapazität (CCDK)

### Durchführung:

Besonders wichtig bei allen Messungen ist, daß sämtliche mit der Meßlösung in Berührung kommenden Teile möglichst frei von Kristallisationskeimen sind. Dies läßt sich durch gründliches Spülen der betroffenen Teile mit verdünnter Salzsäure und anschließendem Nachspülen mit destilliertem Wasser erreichen.

Zur Bestimmung des CCDK-Wertes wurden 1,5 g der zu untersuchenden Substanz in 90 ml destilliertem Wasser gelöst und mit Salzsäure bzw. Natronlauge vorneutralisiert. Die Lösung wurde auf 25,0°C thermostatisiert und mit 10,00 mL einer Natriumcarbonatlösung mit einem Massenanteil w(Na₂CO₃) = 0,10 versetzt. Durch Zugabe von 1 N Salzsäure bzw. 1 N Natronlauge wurde der pH der Lösung auf 1l eingestellt. Während der Titration wurde der pH mittel pH-Stat. konstant gehalten.

Mit einer Zugabegeschwindigkeit von 0,5 mL/min wurde der Meßlösung 0,1 molare Calciumacetat-Maßlösung zudosiert. Das Ausmaß der entstehenden Trübung wurde als Verlust an Lichttransmission mittels Lichtleiterphotometer bei λ = 650 nm gemessen. Die Messung der Titration wurde von 100 % Transmission ausgehend bis ca. 30 % durchgeführt.

Der Endpunkt der Titration wurde durch den Schnittpunkt der linearisierten Verlängerung des Verlaufes vor und des Verlaufes nach Einsetzen der Trübung dargestellt. Bestimmt wurde dabei das verbrauchte Volumen der Calciumacetatlösung bis zum Endpunkt.

Als CCDK-Wert wurde die berechnete Masse des bis zum Endpunkt entstandenen Calciumcarbonates pro Gramm eingesetzter Co-Buildersubstanz angegeben.

**Tabelle II**

| Beispiel | CCDK |
|---|---|
| | [mg CaCO3/g Polymer] |
| 1 | 35 |
| 2 | 40 |
| 3 | 48 |
| 4 | 50 |
| 5 | 81 |
| 6 | 108 |
| 7 (Vergleichsbeispiel) | 19 |

### Bestimmung der Schwermetallmaskierung am Beispiel der H₂O₂-Stabilisierung, Beispiel 5 und 6

In einem 200 mL Meßkolben wurden 4 mL Kupfersulfatlösung (100 mg/L) und 40 mg Wirkstoff vorgelegt, dann auf 200 mL aufgefüllt. Anschließend wurde im Wasserbad auf 70°C erwärmt und mit je 0,8 g 35 %iger Wasserstoffperoxidlösung versetzt. Nach einer Minute, 30 Minuten, 1, 3, 5, 10 und 22 Stunden wurden 20 mL Aliquot iodometrisch titriert.

Als Wirkstoff wurden verwendet:
1) Acrylsäure-Maleinsäure Copolymer (M_{w} ∼ 70.000),
2) Ethylendiamintetraessigsäure, Na-Salz (EDTA),
3) Diethylentriaminpentaessigsaure (DTPA),
4) erfindungsgemäßes Polymer gemäß Beispiel 5,
5) erfindungsgemäßes Polymer gemäß Beispiel 6.

In folgender Tabelle ist jeweils der Gehalt an H₂O₂ in Abhängigkeit von Zeit und Wirkstoff angegeben. Je höher der Gehalt ist, desto besser werden die Schwermetalle, die die Zersetzung des H₂O₂ katalysieren, inhibiert. Die erfindungsgemäßen Polymere inhibieren praktisch ebenso gut wie EDTA und DTPA, die aber nicht biologisch abbaubar sind. Wirkstoff 1 zeigt eine schlechtere Wirkung und ist zudem nicht biologisch abbaubar.

**Tabelle**

| Zeit [h] | Probe Blindwert | Wirkstoff | | | | |
|---|---|---|---|---|---|---|
| | | 1 | 2 | 3 | 4 | 5 |
| 0 | 100 | 100 | 100 | 100 | 100 | 100 |
| 0,5 | 87 | 98 | 100 | 100 | 100 | 100 |
| 1 | 81 | 96 | 100 | 100 | 100 | 100 |
| 3 | 62 | 92 | 100 | 100 | 100 | 100 |
| 5 | 43 | 87 | 100 | 100 | 98 | 100 |
| 10 | 21 | 68 | 100 | 100 | 96 | 100 |
| 22 | 0 | 0 | 100 | 100 | 94 | 100 |

## Patentansprüche

1. Polymer mit wiederkehrenden Succinyleinheiten der Formeln 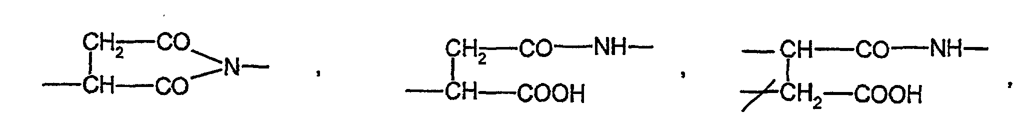 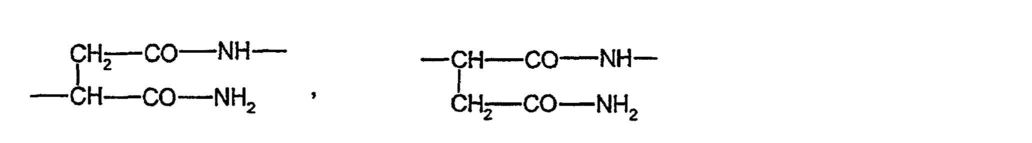 **dadurch gekennzeichnet, daß** Iminodisuccinateinheiten der Formeln 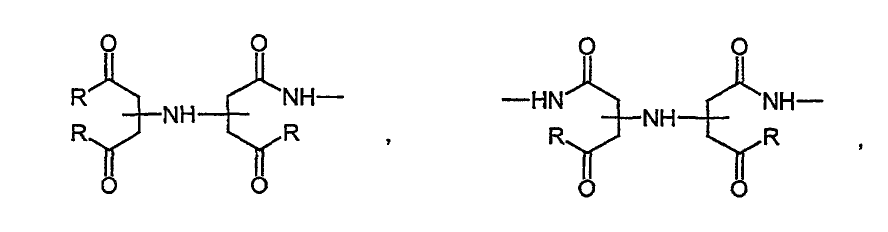 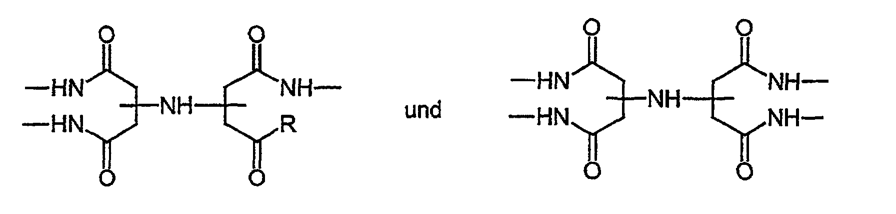 wobei R, OH, O⁻NH₄⁺ oder NH₂ bedeutet,
als wiederkehrende Einheiten in das Polymer eingebaut sind und das molare Verhältnis der im Polymer eingebauten Iminodisuccinateinheiten zur Summe aller im Polymer eingebauten wiederkehrenden Einheiten 2 bis 25 Mol-% beträgt.

2. Polymer nach Anspruch 1, **dadurch gekennzeichnet, daß** Iminodisuccinateinheiten als Endgruppen eingebaut sind.

3. Verfahren zur Herstellung von Polymeren mit wiederkehrenden Succinyleinheiten der Formeln 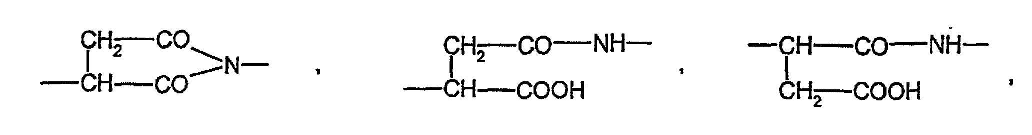 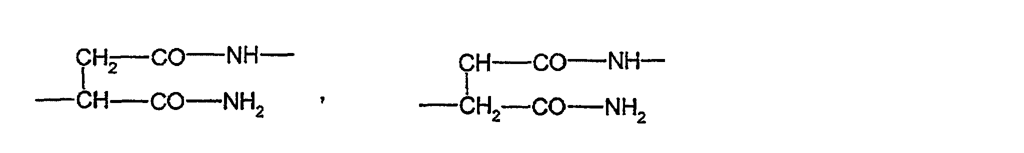 worin Iminodisuccinateinheiten der Formeln 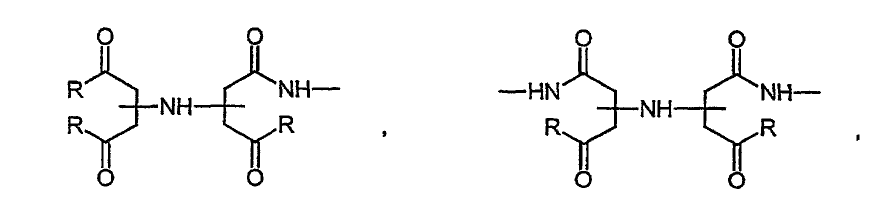 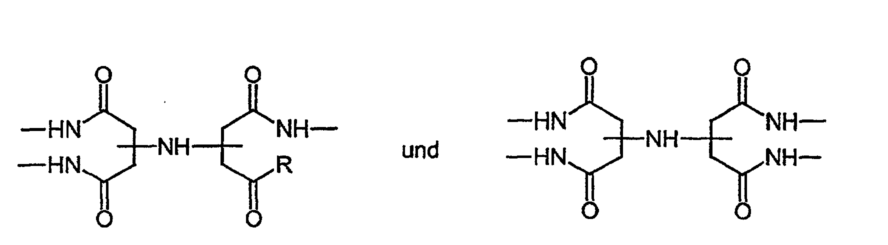 wobei R, OH, O⁻NH₄⁺ oder NH₂ bedeutet,
als wiederkehrende Einheiten in das Polymer eingebaut sind und das molare Verhältnis der im Polymer eingebauten Iminodisuccinateinheiten zur Summe aller im Polymer eingebauten wiederkehrenden Einheiten 2 bis 25 Mol-% beträgt, **dadurch gekennzeichnet, daß** man Maleinsäureanhydrid, Maleinsäure, Fumarsäure oder deren Derivate, gegebenenfalls in Anwesenheit von Comonomeren, in Gegenwart von überschüssigem Ammoniak im Molverhältnis 1:1,5-4,0 bei 150°C bis 190°C in einer Vorrichtung zur thermischen Polymerisation die eine enge Verweilzeitverteilung der viskos-flüssigen Phase und gleichzeitig partielles Verdampfen des Lösungsmittels sowie des bei der Polymerisation gebildeten Reaktionswassers ermöglicht, polymerisiert und gegebenenfalls die erhaltenen primären Polymerisationsprodukte teilweise oder vollständig neutralisiert.

4. Verfahren gemäß Anspruch 3, **dadurch gekennzeichnet dass** diese Vorrichtungen Verweilrohre, Hochviskosreaktoren, Trockner, Rührkesselkaskaden, Dünnschichtverdampfer oder Mehrphasen-Wendelrohr-Reaktoren sind.

5. Verfahren gemäß Anspruch 4, **dadurch gekennzeichnet, dass** eine Apparatekombination aus Strahlmischer und Rohrreaktor oder Mehrphasenwendelrohr eingesetzt wird.

6. Verwendung der Polymere gemäß Anspruch 1 zur Komplexierung von Schwermetallen in wäßrigen Systemen.

7. Verwendung der Polymere gemäß Anspruch 1 zum Dispergieren von Calciumcarbonat.

8. Verwendung der Polymere gemäß Anspruch 1 in Waschmitteln, Reinigungsmitteln und Kühlkreisläufen.

9. Verwendung der Polymere gemäß Anspruch 1 in Verdampfern oder Meerwasserentsalzungsanlagen.

10. Verwendung der Polymere gemäß Anspruch 1 bei der sekundären Erdölförderung.

## Claims

1. Polymer with recurring succinyl units having the formulae 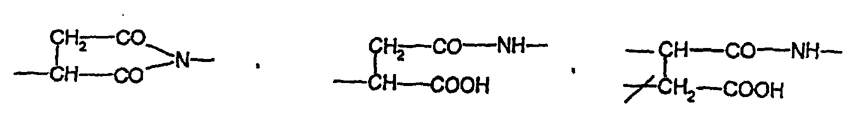 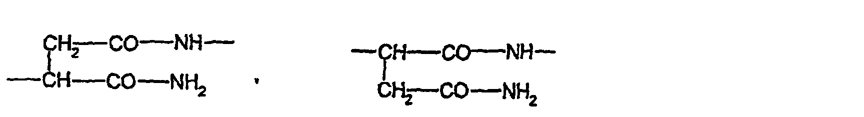 **characterised in that** iminodisuccinate units having the formulae 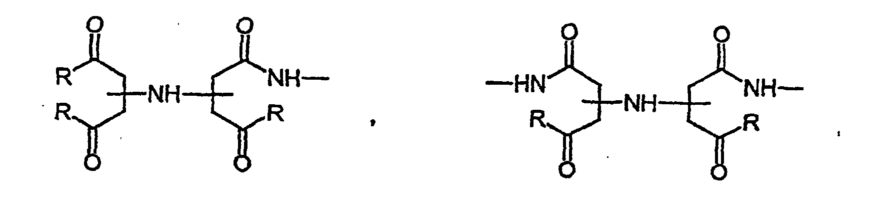 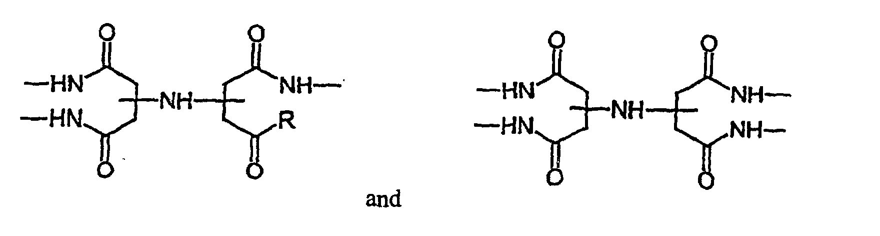 whereby R denotes OH, O⁻NH₄⁺ or NH₂,
are incorporated into the polymer as recurring units and the molar ratio of the iminodisuccinate units incorporated in the polymer to the sum of all recurring units incorporated in the polymer is 2 to 25 mol%.

2. Polymer according to claim 1, **characterised in that** iminodisuccinate units are incorporated as terminal groups.

3. Process for the production of polymers with recurring succinyl units having the formulae 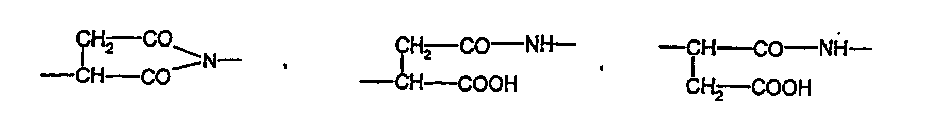 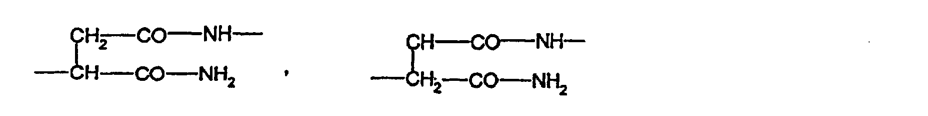 wherein iminodisuccinate units having the formulae 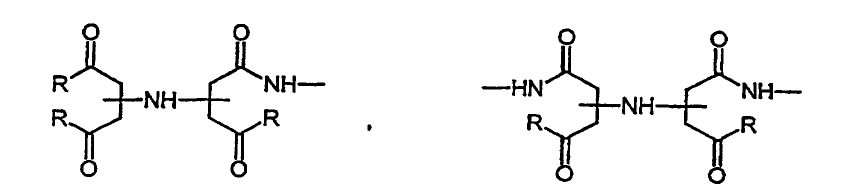 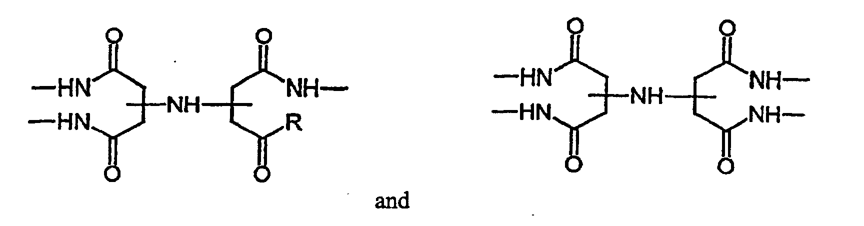 whereby R denotes OH, O⁻NH₄⁺ or NH₂,
are incorporated into the polymer as recurring units and the molar ratio of the iminodisuccinate units incorporated in the polymer to the sum of all recurring units incorporated in the polymer is 2 to 25 mol%, **characterised in that** maleic anhydride, maleic acid, fumaric acid or derivatives thereof, optionally in the presence of comonomers, are polymerised in the presence of excess ammonia in the molar ratio 1:1.5-4.0 at 150°C to 190°C in a thermal polymerisation device permitting a narrow residence time distribution of the viscoliquid phase and simultaneously partial evaporation of the solvent and of the reaction water formed during polymerisation and the primary polymerisation products obtained are optionally partially or wholly neutralised.

4. Process according to claim 3, **characterised in that** these devices are storage and reaction tubes, high-viscosity reactors, dryers, stirred-tank reactors in series, film evaporators or multiphase helical tubular reactors.

5. Process according to claim 4, **characterised in that** a combined apparatus comprising jet mixer and tubular reactor or multiphase helical tubular reactor is used.

6. Use of the polymers according to claim 1 for the complexation of heavy metals in aqueous systems.

7. Use of the polymers according to claim 1 for the dispersion of calcium carbonate.

8. Use of the polymers according to claim 1 in detergents, cleaning agents and cooling circuits.

9. Use of the polymers according to claim 1 in evaporators or sea water desalination units.

10. Use of the polymers according to claim 1 in secondary petroleum extraction.

## Revendications

1. Polymère avec des unités succinyle récurrentes de formules 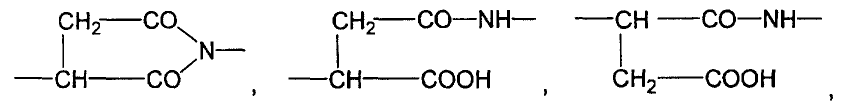 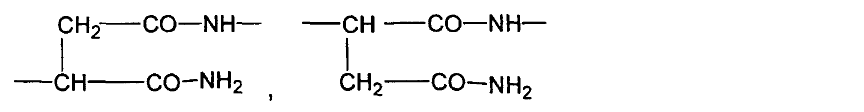 **caractérisé en ce que** ce que des unités iminodisuccinate de formules 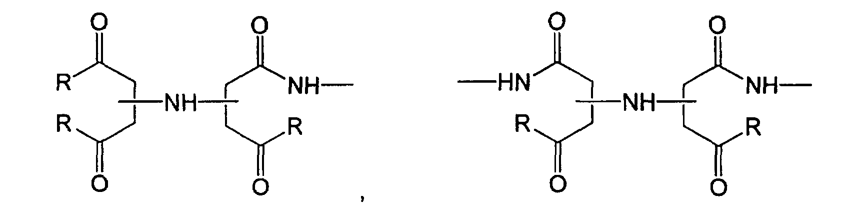 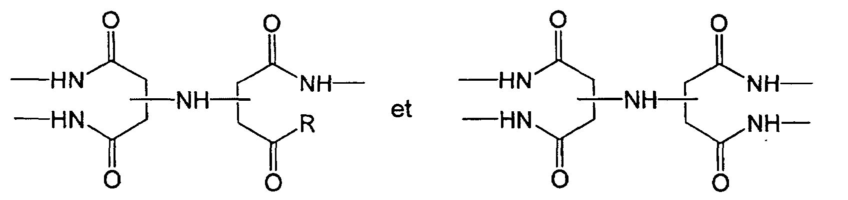 dans lesquelles R est OH, O⁻NH₄⁺ ou NH₂,
sont incorporées comme unités récurrentes dans le polymère et que le rapport molaire des unités iminodisuccinate incorporées dans le polymère à la somme de toutes les unités récurrentes incorporées dans le polymère étant 2 à 25% en moles.

2. Polymère selon la revendication 1, **caractérisé en ce que** les unités iminodisuccinate sont incorporées comme groupes terminaux.

3. Procédé de préparation de polymères avec des unités succinyle récurrentes de formules 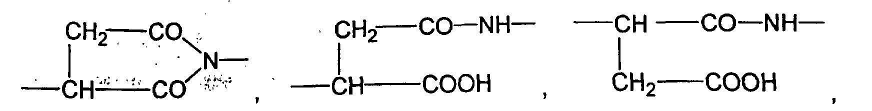 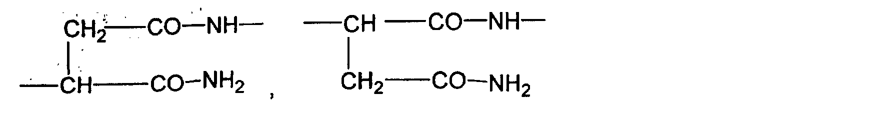 où des unités iminodisuccinate de formules 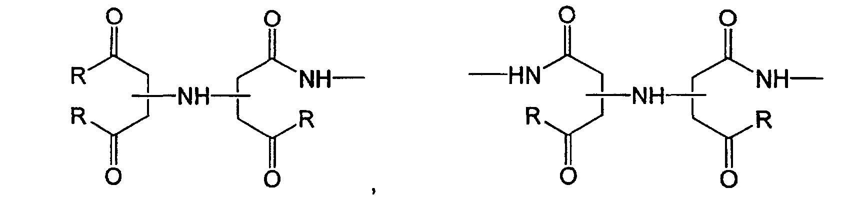 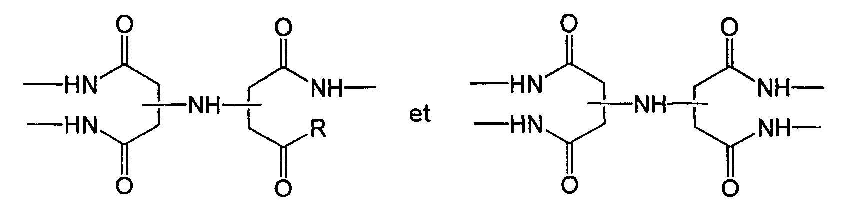 dans lesquelles R est OH, O⁻NH₄⁺ ou NH₂,
sont incorporées comme unités récurrentes dans le polymère et le rapport molaire des unités iminidisuccinate incorporées dans le polymère à la somme de toutes les unités récurrentes incorporées dans le polymère étant 2 à 25% en moles, **caractérisé en ce qu'**on polymérise l'anhydride maléique, l'acide maléique, l'acide fumarique ou leurs dérivés ,éventuellement en présence de comonomères, en présence d'un excès d'ammoniaque, selon un rapport molaire 1 : 1,5 - 4,0 à 150°C à 190°C, dans un dispositif pour la polymérisation thermique qui permet une répartition étroite de la durée de séjour de la phase liquide visqueuse et simultanément une vaporisation partielle du solvant ainsi que de l'eau de réaction formée par la polymérisation, et éventuellement la neutralisation complètement ou partiellement des produits de polymérisation primaires résultants.

4. Procédé selon la revendications 3, **caractérisé en ce que** ces dispositifs sont des tubes de contact, des réacteurs pour viscosité élevée, des sécheurs, des cascades de réservoirs agités, des évaporateurs à couche mince ou des réacteurs à tube hélicoïdal pour phases multiples.

5. Procédé selon la revendications 4, **caractérisé en ce qu'**on utilise une combinaisons d'appareils mélangeur à jet et réacteur à tube ou tube hélicoïdal pour phases multiples.

6. Utilisation des polymères selon la revendication 1 pour la complexation de métaux lourds dans des systèmes aqueux.

7. Utilisation des polymères selon la revendication 1 pour la dispersion de carbonate de calcium.

8. Utilisation des polymères selon la revendication 1 dans des détergents, des agents de nettoyage et des circuits de refroidissement.

9. Utilisation des polymères selon la revendication 1 dans des évaporateurs ou des usines de dessalement d'eau de mer.

10. Utilisation des polymères selon la revendication 1 pour la production d'huile secondaire.
